Europäisches Patentamt

**(19)** European Patent Office

Office européen des brevets

**(11)** Publication number : **0 335 306 B1**

## **(12)** EUROPEAN PATENT SPECIFICATION

**(45)** Date of publication of patent specification :
24.05.95 Bulletin 95/21

**(51)** Int. Cl.⁶ : **G06F 17/14**

**(21)** Application number : **89105401.7**

**(22)** Date of filing : **28.03.89**

**(54)** Method and device for obtaining in real time the two-dimensional discrete cosine transform.

**(30)** Priority : **30.03.88 ES 8800988**

**(43)** Date of publication of application :
**04.10.89 Bulletin 89/40**

**(45)** Publication of the grant of the patent :
**24.05.95 Bulletin 95/21**

**(84)** Designated Contracting States :
**AT BE CH DE ES FR GB IT LI NL SE**

**(56)** References cited :
EP-A- 0 254 824
PHILIPS TECH. REV. VOL. 38, NO. 4/5, 1978/79,
PAGES 119-130; H.BACCHI ET AL.:
"REAL-TIME ORTHOGONAL TRANSFOR-
MATION OF COLOUR-TELEVISION PIC-
TURES"

**(73)** Proprietor : **ALCATEL N.V.**
**Strawinskylaan 341,**
**(World Trade Center)**
**NL-1077 XX Amsterdam (NL)**
**(84)** **BE CH DE FR GB IT LI NL SE AT**
Proprietor : **ALCATEL STANDARD**
**ELECTRICA, S.A.**
**Ramirez de Prado, 5**
**ES-28045 Madrid (ES)**
**(84)** **ES**

**(72)** Inventor : **Sanjuan Flores, Tomas c/o Alcatel**
**Standard Electr.**
**S.A.**
**Ramirez de Prado, 5**
**ES-28045 Madrid (ES)**

**(74)** Representative : **Weinmiller, Jürgen et al**
**Lennéstrasse 9**
**Postfach 24**
**D-82336 Feldafing (DE)**

## Description

This invention, as stated in the title of this specification, consists of a method and a device for obtaining in real time the two-dimensional discrete cosine transform.

In the field of signal compression, and especially in that of video signal compression, the use of the discrete cosine transform (DCT) is widely employed as a key element in the compression process.

To date, many procedures have been proposed to obtain fast algorithms that perform the calculation of the discrete cosine transform which are based on reducing the number of operations required by taking advantage of the characteristics of the transform itself. The effectiveness of these fast algorithms is simulated on computers, however their use is presently prohibitive for video applications in real time.

For the compression of a video signal in real time, the computation of a discrete cosine transform by software implies complex architectures in signal processors. As a result, the present trend is to perform these fast algorithms by means of specific VLSI circuits.

Nevertheless, these types of specific VLSI circuits are not yet commercially available, consequently they cannot be used for immediate applications.

Based on the mathematical theory, an orthogonal transform in two dimensions of a data set can be broken down into two one-dimensional transforms applied successively to the said data, in such a way that the two-dimensional transform is equal to the coefficients matrix multiplied by the input data matrix and multiplied by the transposed coefficients matrix.

The device that performs the method corresponding to EP-A-0 254 824, is formed by two multiplier circuits, two memories and a selection logic that at each moment allocates to each of the memories the read function for column wise reading the recently calculated matrix row or the write function for row wise writing the new row to be calculated.

The method of obtaining the two-dimensional discrete cosine transform in real time, according to this invention, takes also advantage of the possibility of breaking a two-dimensional transform down to two one-dimensional transforms. This is made practical through a structure in two stages that operate simultaneously with respect to the rows of the intermediate result matrix, the first stage generating the data for the second stage and the second stage using the data that have been supplied to it by the first stage.

The method is characterised in that the effective time employed in calculating the two-dimensional discrete cosine transform is almost the same as the time taken to calculate the one-dimensional cosine transform.

Consequently the structure of the method permits working in real time with real sequences and images, making use of components that are already commercially available.

In addition, the method offers great accuracy in the operations, with respect to both intermediate and final results.

In order to make this specification more easily understood, and forming an integral part thereof, a series of figures are attached which illustrate in a non-limiting manner, the following features:

Figure 1, illustrating a schematic diagram of a way to calculate a two-dimensional transform.

Figure 2, illustrating the structure of a device to implement the method object of the invention.

As mentioned above, the method of the invention uses the possibility of breaking a two-dimensional transform down into two one-dimensional transforms.

As is well known, an orthogonal transform in two dimensions of a data set can be broken down into two one-dimensional transforms applied in succession to the said data, as given by the expression:

$$[T] = [C] [X] [C]^t$$

where,

T = Two-dimensional transform

C = Coefficients matrix

$C^t$ = Transposed coefficients matrix

X = Input data matrix

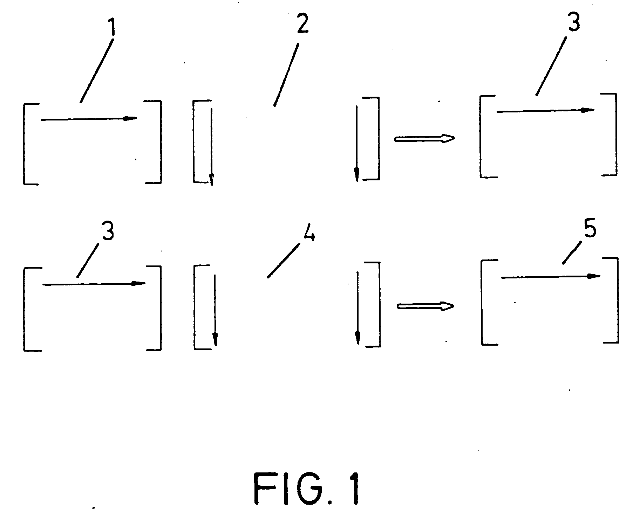

The method of the invention carries out the calculation of the expression above by multiplying the coefficients matrix 1 by the input data matrix 2, which gives as a result a new intermediate matrix 3. Carrying out this operation in the form of rows of the coefficients matrix 1 multiplied by columns of the input data matrix 2, gradually produces the rows of the intermediate matrix 3, in accordance with that shown in figure 1. Once matrix 3 has been obtained, the product is calculated of the intermediate matrix and the transposed coefficients matrix 4, in order to obtain the two-dimensional transform 5, so that by multiplying rows of the intermediate matrix 3 by the columns of the transposed coefficients matrix 4, the two-dimensional transform 5 is obtained row by row.

As soon as the result of the first row in intermediate matrix 3 has been obtained, and while the result of the second row of the said matrix 3 is being obtained, the contents of the said first row of intermediate matrix 3 are used to obtain the elements of row one of the transformed two-dimensional matrix. The same procedure is used with the rest of the rows of intermediate matrix 3. The result is that the time employed in calculating the two-dimensional discrete cosine transform is effectively almost the same as that required in calculating a one-dimensional discrete cosine transform, with the consequent saving in process time given that when the last row of the intermediate matrix 3 is being obtained, the last but one row of the two-dimensional transformed matrix has been obtained simultaneously and the only thing left to calculate is the last row in this matrix.

In terms of real time, the time taken in calculating this last row of the two-dimensional transformed matrix becomes merely an initial delay after which there is no difference between the time used in calculating one-dimensional and two-dimensional transforms.

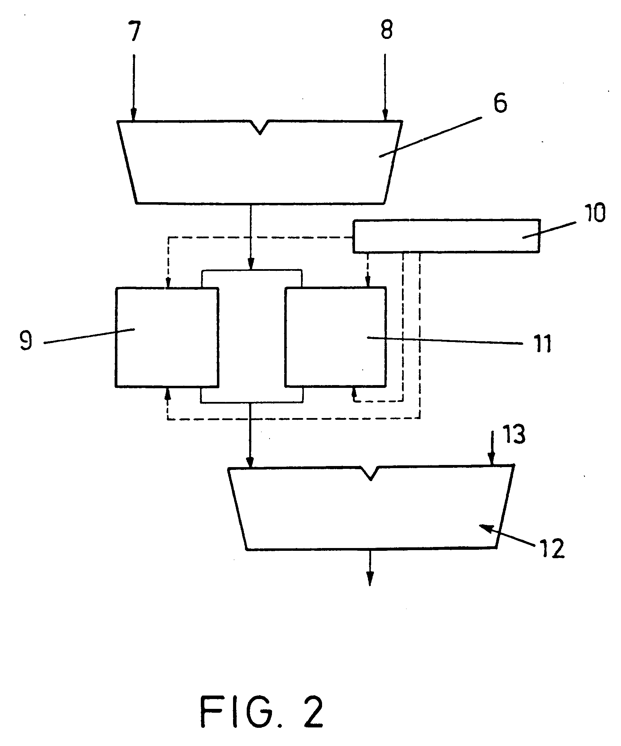

Figure 2 shows the structure of the device which permits the practical implementation of the method described above

The mechanism of the invention is formed by two multiplier circuits, 6, 12 two FIFO (first-in, first-out) memories 9, 11 as well as the selection logic 10 which, at each moment, allocates the read function for the most recently calculated row or the write function for the new row to be calculated to each of the FIFO memories 9 and 11.

In initial conditions, the logic 10 configures FIFO memory 9 as a write element for the output of multiplier 6, FIFO memories 9 and 11 being empty.

Firstly, the coefficients of the first row of the coefficients matrix 1 are introduced at input 7 of multiplier 6, while to input 8 are applied the columns of input data matrix 2; the results of this operation (the elements of the first row of intermediate matrix 3) are progressively stored in the registers of the FIFO memory 9. The selection logic 10 assigns FIFO memory 11 to be the read memory for the multiplier 12 however, since FIFO memory 11 is empty, the multiplier 12 receives no feed and no output is produced (elements of the rows of the final two-dimensional transformed matrix 5).

When processing of the elements of the first row of the coefficients matrix 1 has been completed, selection logic 10 interchanges the roles of FIFO memories 9 and 11, and hence the results of the operation of the coefficients of the second row of the coefficients matrix 1 with the input data from the input data matrix 2 are stored in FIFO memory 11. At the same time as the preceding operation, the multiplier 12 computes the first row of the final two-dimensional transformed matrix using, to do so, the elements of the first row of the intermediate matrix 3 stored in FIFO memory 9 and the coefficients, by columns, of the transposed coefficients matrix 4, said data being introduced through input 13.

The process is repeated until, at a given moment, the multiplier 6 has obtained and loaded the elements of the last row of the intermediate matrix 3 into one of the FIFO memories whilst, simultaneously, multiplier 12 obtains the elements of the last but one row of the final two-dimensional transformed matrix, using for this the coefficients, by columns, of the transposed coefficients matrix 4 and the elements of the last but one row of the intermediate matrix 3, which have been stored in the other FIFO memory.

Consequently, when multiplier 6 has obtained the elements of the last row of the intermediate matrix 3 (which would be the result in the case of a one-dimensional discrete cosine transform) multiplier 12 has obtained all the rows of the final two-dimensional transformed matrix except the last one. It is therefore necessary to continue the process only for this last one, so achieving a great saving of time in the process.

## Claims

1. Method for obtaining in real time the two-dimensional discrete cosine transform of input signals, especially applicable to the compression of video signals, in real time with actual sequences and images, this method making use of the possibility of breaking a two-dimensional transform down into two one-dimensional transforms, the first one-dimensional discrete cosine transform matrix $[P] = [C] * [X]$ being calculated on a row by row basis, where $[P]$ is the intermediate result matrix, $[C]$ is the coefficients matrix and $[X]$ is the input data matrix,
the method being characterised in that
the second one-dimensional discrete cosine transform matrix $[T] = [P] * [C^t]$ is calculated on a row by row basis too, from the rows of the first one-dimensional discrete cosine transform, where $[T]$ is the final result matrix of the second one-dimensional discrete cosine transform and $[C^t]$ is the transposed coefficients matrix, so that a row of the two-dimensional discrete cosine transform is obtained from a row of the input signals only after twice the time necessary for calculating a row of a one-dimensional discrete cosine transform, and that a full two-dimensional discrete cosine transform is obtained only after the time necessary for calculating a full one-dimensional discrete cosine transform, increased by the time necessary for calculating a row of a one-dimensional discrete cosine transform.

2. Device for applying the method of claim 1 and being formed by a first multiplier circuit (6) for calculating calculate successive rows of the first one-dimensional discrete cosine transform, that is connected to two FIFO (first in, first out) memories (9, 11), each one to store one row of the one-dimensional discrete cosine transform, which in turn are connected to a selection logic circuit (10), so that when said first multiplier circuit (6) has calculated a first row of a first one-dimensional discrete cosine transform, the result is stored into a first FIFO memory (9), and then, when said first multiplier circuit (6) has calculated a second row of said first one-dimensional discrete cosine transform, the result is stored into a the second FIFO memory (11), the device also including a second multipler circuit (12) characterized in that said second multiplier circuit (12) calculates a first row of a second one-dimensional discrete cosine transform, so that to provide one row of the final two-dimensional discrete cosine transform, as from the contents of said second FIFO memories (11), whereas said first FIFO memory (9) is storing one row of said first one-dimensional discrete cosine transform from said first multipler circuit (6), and then to calculate a second row of said second one-dimensional discrete cosine transforme, i.e. of the final two-dimensional discrete cosine transform, as from the contents of said first FIFO memories (9), whereas said second FIFO memory (11) is storing a second row of said first one-dimensional discrete cosine transform from said first multipler circuit (6), and so on.

## Patentansprüche

1. Verfahren zum Erhalten der zweidimensionalen diskreten Cosinustransformation von Eingangssignalen in Echtzeit, speziell anwendbar auf die Kompression von Bildsignalen in Echtzeit mit aktuellen Folgen und Abbildern, wobei dieses Verfahren Nutzen aus der Möglichkeit der Aufteilung einer zweidimensionalen Transformation in zwei eindimensionale Transformationen zieht, wobei die erste eindimensionale diskrete Cosinustransformiertenmatrix [P] = [C] ∗ [X] auf einer zeilenweisen Basis errechnet wird, wobei [P] die Zwischenergebnismatrix, C die Koeffizientenmatrix und [X] die Eingangsdatenmatrix sind,
wobei das Verfahren dadurch gekennzeichnet ist, daß
die zweite eindimensionale diskrete Cosinustransformationsmatrix [T] = [P] ∗ [Cᵗ] ebenfalls zeilenweise aus den Zeilen der ersten eindimensionalen diskreten Cosinustransformation berechnet wird, wobei [T] die abschließende Ergebnismatrix der zweiten eindimensionalen diskreten Cosinustransformation und [Cᵗ] die transponierte Koeffizientenmatrix ist, so daß eine Zeile der zweidimensionalen diskreten Cosinustransformation aus einer Zeile der Eingangssignale nur nach der doppelten Zeit gebildet wird, die für die Berechnung einer Zeile einer eindimensionalen diskreten Cosinustransformation erforderlich ist, und daß eine vollständige zweidimensionale diskrete Cosinustransformation nur nach der Zeit gebildet wird, die für das Berechnen einer vollständigen eindimensionalen diskreten Cosinustransformation erforderlich ist, erhöht um die Zeit, die für das Berechnen einer Zeile einer eindimensionalen diskreten Cosinustransformation erforderlich ist.

2. Vorrichtung zum Anwenden des Verfahrens von Anspruch 1, und bestehend aus einem ersten Multiplikatorschaltkreis (6) zum Berechnen aufeinanderfolgender Zeilen der ersten eindimensionalen diskreten Cosinustransformation, der mit zwei FIFO- (first-in first-out) Speichern (9, 10) verbunden ist, wobei jeder eine Zeile der eindimensionalen diskreten Cosinustransformation speichern soll, die ihrerseits mit einem Auswahllogikschaltkreis (10) verbunden sind, so daß dann, wenn der erste Multiplikatorschaltkreis (6) eine erste Zeile einer ersten eindimensionalen diskreten Cosinustransformation berechnet hat, das Ergebnis in einem ersten FIFO-Speicher (9) gespeichert wird, und dann, wenn der erste Multiplikatorschaltkreis (6) eine zweite Zeile der ersten eindimensionalen diskreten Cosinustransformation berechnet hat, das Ergebnis in einem zweiten FIFO-Speicher (11) gespeichert wird, wobei die Vorrichtung auch einen zweiten Multiplikatorschaltkreis (12) umfaßt, der dadurch gekennzeichnet ist, daß der zweite Multiplikatorschaltkreis (12) eine erste Zeile einer zweiten eindimensionalen diskreten Cosinustransformation berechnet, um damit eine Zeile der abschließenden zweidimensionalen diskreten Cosinustransformation aus den Inhalten der zweiten FIFO-Speicher (11) zur Verfügung zu stellen, wohingegen der erste FIFO-Speicher (9) eine Zeile der ersten eindimensionalen diskreten Cosinustransformation aus dem ersten Multiplikatorschaltkreis (6) speichert, und um dann eine zweite Zeile der zweiten eindimensionalen diskreten Cosinustransformation zu berechnen, d.h. der abschließenden zweidimensionalen diskreten Cosinustransformation aus den Inhalten der ersten FIFO-Speicher (9), wohingegen der zweite FIFO-Speicher (11) eine zweite Zeile der ersten eindimensionalen diskreten Cosinustransformation aus dem ersten Multiplikatorschaltkreis (6) speichert und so weiter.

## Revendications

1. Méthode pour obtenir en temps réel la transformation en cosinus discrète bidimensionnelle de signaux d'entrée, applicable en particulier à la compression de signaux vidéo, en temps réel avec les séquences et les images réelles, cette méthode utilisant la possibilité de décomposer une transformation bidimensionnelle en deux transformations monodimensionnelles, la première matrice de transformation à cosinus discrète monodimensionnelle [P] = [C] ∗ [X] étant calculée sur une base ligne à ligne, [P] étant la matrice de résultat intermédiaire, [C] étant la matrice de coefficients et [X] étant la matrice des données d'entrée,

la méthode étant caractérisée par le fait que

la seconde matrice de transformation en cosinus discrète monodimensionnelle [T] = [P] ∗ [Cᵗ] se calcule sur une base ligne à ligne également, à partir des lignes de la première transformation en cosinus discrète monodimensionnelle, [T] étant la matrice de résultat finale de la seconde transformation en cosinus discrète monodimensionnelle et [Cᵗ] étant la matrice des coefficients transposée, de sorte qu'une ligne de la transformation en cosinus discrète bidimensionnelle ne s'obtient, à partir d'une ligne des signaux d'entrée, qu'en deux fois le temps nécessaire pour calculer une ligne d'une transformation en cosinus discrète monodimensionnelle, et qu'une transformation en cosinus discrète bidimensionnelle complète ne s'obtient qu'en le temps nécessaire pour calculer une transformation à cosinus discrète bidimensionnelle complète, augmenté du temps nécessaire pour calculer une ligne d'une transformation à cosinus discrète monodimensionnelle.

2. Dispositif prévu pour appliquer la méthode de la revendication 1 et formé par un premier circuit multiplicateur (6) qui est prévu pour calculer les lignes successives de la première transformation en cosinus discrète monodimensionnelle et qui est relié à deux mémoires FIFO (premier entré, premier sorti) (9, 11), chacune pour mémoriser une ligne de la transformation en cosinus discrète monodimensionnelle, qui, à leur tour, sont reliées à un circuit logique de sélection (10) de sorte que, lorsque ledit premier circuit multiplicateur (10) a calculé une première ligne d'une première transformation en cosinus discrète monodimensionnelle, le résultat se mémorise dans une première mémoire FIFO (9) et que, lorsque ledit premier circuit multiplicateur (6) a calculé une seconde ligne de ladite première transformation en cosinus discrète monodimensionnelle, le résultat se mémorise dans une seconde mémoire FIFO (11), le dispositif incluant également un second circuit multiplicateur (12),

caractérisé par le fait que ledit second circuit multiplicateur (12) calcule une première ligne d'une seconde transformation en cosinus discrète monodimensionnelle de façon à fournir une première ligne de la transformation en cosinus discrète bidimensionnelle finale, en tant que provenant du contenu de ladite seconde mémoire FIFO (11), pendant que ladite première mémoire FIFO (9) est en train de mémoriser la première rangée de ladite première transformation en cosinus discrète monodimensionnelle en provenance dudit premier circuit multiplicateur (6), puis à calculer une seconde rangée de ladite seconde transformation en cosinus discrète monodimensionnelle, c'est-à-dire de la transformation en cosinus discrète bidimensionnelle finale, en tant que provenant du contenu de ladite première mémoire FIFO (9), pendant que ladite seconde mémoire FIFO (11) est en train de mémoriser une seconde ligne de ladite première transformation en cosinus discrète monodimensionnelle en provenance dudit premier circuit multiplicateur (6), et ainsi de suite.

FIG. 1

FIG. 2